# FASCICULE DE BREVET EUROPEEN

(11) **EP 2 323 960 B1**
(45) Date de publication et mention de la délivrance du brevet: **14.12.2016**
(21) Numéro de dépôt: 09782886.7
(22) Date de dépôt: 10.09.2009
(51) Int. Cl.: H01M 4/38, H01M 4/587, H01M 4/133, H01M 4/134, H01M 10/052, H01M 4/36, C04B 35/628

(54) **PROCÉDÉ DE PRÉPARATION D'UN MATÉRIAU COMPOSITE SILICIUM/CARBONE**
VERFAHREN ZUR HERSTELLUNG EINES SILICIUM/KOHLENSTOFF-VERBUNDWERKSTOFFS
METHOD FOR PRODUCING A SILICON/CARBON COMPOSITE MATERIAL

(30) Priorité: 12.09.2008 FR 0856158
(43) Date de publication de la demande: 25.05.2011
(73) Titulaire: Commissariat à l'Énergie Atomique et aux Énergies Alternatives, 75015 Paris (FR)
(72) Inventeur: ALIAS, Mélanie, F-77167 Poligny (FR); LE CRAS, Frédéric, 38470 Vinay (FR)
(74) Mandataire: Ilgart, Jean-Christophe
(86) Numéro de dépôt international: PCT/EP2009/061772
(87) Numéro de publication internationale: WO 2010/029135

(56) Documents cités:
- CHEN L ET AL: "Spherical nanostructured Si/C composite prepared by spray drying technique for lithium ion batteries anode" MATERIALS SCIENCE AND ENGINEERING B, ELSEVIER SEQUOIA, LAUSANNE, CH, vol. 131, no. 1-3, 15 juillet 2006 (2006-07-15), pages 186-190, XP025099833 ISSN: 0921-5107 [extrait le 2006-07-15] cité dans la demande
- SEE HOW NG ET AL: "Amorphous carbon-coated silicon nanocomposites: a low-temperature synthesis via spray pyrolysis and their application as high-capacity anodes for lithium-ion batteries" JOURNAL OF PHYSICAL CHEMISTRY C AMERICAN CHEMICAL SOCIETY USA, vol. 111, no. 29, 26 juillet 2007 (2007-07-26), pages 11131-11138, XP002528426 ISSN: 1932-7447
- LIU Y ET AL: "Electrochemical behaviors of Si/C composite synthesized from F-containing precursors" JOURNAL OF POWER SOURCES 20090401 ELSEVIER NL, vol. 189, no. 1, 19 août 2008 (2008-08-19) , pages 733-737, XP002528427
- ZHANG X-W ET AL: "Electrochemical performance of lithium ion battery, nano-silicon-based, disordered carbon composite anodes with different microstructures" JOURNAL OF POWER SOURCES, ELSEVIER, AMSTERDAM, NL, vol. 125, no. 2, 14 janvier 2004 (2004-01-14), pages 206-213, XP004484046 ISSN: 0378-7753
- NG S H ET AL: "Spray-pyrolyzed silicon/disordered carbon nanocomposites for lithium-ion battery anodes" JOURNAL OF POWER SOURCES, ELSEVIER SA, CH LNKD- DOI:10.1016/J.JPOWSOUR.2007.06.165, vol. 174, no. 2, 6 décembre 2007 (2007-12-06), pages 823-827, XP025917653 ISSN: 0378-7753 [extrait le 2007-12-06]
- SEE HOW NG ET AL: "Amorphous carbon-coated silicon nanocomposites: a low-temperature synthesis via spray pyrolysis and their application as high-capacity anodes for lithium-ion batteries" JOURNAL OF PHYSICAL CHEMISTRY PART C: NANOMATERIALS AND INTERFACES, AMERICAN CHEMICAL SOCIETY, US LNKD- DOI:10.1021/JP072778D, vol. 111, no. 29, 26 juillet 2007 (2007-07-26), pages 11131-11138, XP009112611 ISSN: 1932-7447

## Description

### DOMAINE TECHNIQUE

L'invention concerne un procédé de préparation d'un matériau composite silicium/carbone.

En particulier, le matériau composite silicium/carbone préparé par le procédé selon l'invention peut être utilisé en tant que matière électrochimiquement active d'électrode, en particulier d'électrode négative, dans les systèmes électrochimiques à électrolyte organique, non aqueux, tels que les accumulateurs électrochimiques rechargeables à électrolyte organique, notamment dans les batteries au lithium et encore plus précisément dans les batteries aux ions lithium.

Le domaine technique de l'invention peut être défini de manière générale comme celui des électrodes mises en oeuvre dans les systèmes électrochimiques à électrolyte non aqueux, organique et plus particulièrement comme celui des accumulateurs rechargeables à électrolyte organique tels que les accumulateurs, batteries au lithium et plus particulièrement les accumulateurs, batteries aux ions lithium.

### ÉTAT DE LA TECHNIQUE ANTÉRIEURE

En effet, la croissance du marché des équipements portables a permis à la technologie des accumulateurs au lithium d'émerger ; et ensuite le cahier des charges pour les appareils mettant en oeuvre ces accumulateurs est devenu de plus en plus contraignant. Ces appareils demandent toujours plus d'énergie et d'autonomie tandis qu'une diminution du volume et du poids des accumulateurs est en même temps souhaitée.

La technologie lithium offre les meilleures caractéristiques par rapport aux autres technologies présentes. L'élément lithium est le plus léger et le plus réducteur des métaux et les systèmes électrochimiques utilisant la technologie lithium peuvent atteindre des tensions de 4V contre 1,5 V pour les autres systèmes.

Les batteries à ions lithium offrent une densité d'énergie massique de 200 Wh/kg contre 100 Wh/kg pour la technologie NiMH, 30 Wh/kg pour le plomb, et 50 Wh/kg pour NiCd.

Cependant les matériaux actuels et en particulier les matériaux actifs d'électrode atteignent leurs limites en termes de performances.

Ces matériaux actifs d'électrodes sont constitués par une matière électrochimiquement active qui constitue une structure d'accueil dans laquelle les cations, par exemple les cations lithium, s'insèrent et se désinsèrent au cours du cyclage. Le matériau actif d'électrode négative le plus couramment utilisé dans les accumulateurs aux ions lithium est le carbone graphite, mais sa capacité réversible est faible et il présente une perte de capacité irréversible « ICL ».

Dans le cas des matériaux actifs d'électrode négative en filière Li/ion, une possibilité permettant d'en améliorer les performances est de remplacer le graphite par un autre matériau de meilleure capacité comme l'étain, ou le silicium.

Avec une capacité théorique estimée à 3579 mAh/g (pour Si → Li_{3,75}Si), le silicium représente une alternative souhaitable au carbone. Néanmoins ce matériau possède un inconvénient majeur empêchant son utilisation. En effet, l'expansion volumique des particules de silicium de près de 300% en cours de charge (système Li-ion) entraîne la fissuration des particules et le décollement de celles-ci du collecteur de courant.

Afin de fournir un matériau capable de maintenir l'intégrité de l'électrode après des cycles de charge-décharge répétés et de surmonter les problèmes inhérents au silicium de nombreuses recherches ont, depuis plusieurs années, porté sur des composites dans lesquels le silicium est dispersé dans une matrice et en particulier sur les composites silicium/carbone.

Dans la littérature, diverses méthodes telles que le broyage énergétique, le dépôt chimique en phase vapeur (CVD) sont envisagées pour préparer un composite silicium/carbone. Le broyage énergétique consiste à mélanger des particules de silicium et de carbone sous l'action mécanique de billes. Dans le cas du dépôt chimique en phase vapeur (CVD), le silane (Si H₄) est généralement le gaz précurseur. Dans l'enceinte du four, se trouve le carbone à enrober. Le gaz quand il traverse l'enceinte chauffée, se décompose en particules de silicium nanométrique à la surface du carbone.

Les composites Si/C ont une meilleure cyclabilité que le silicium pur mais montrent une chute de capacité après un certain nombre de cycles charge-décharge. Ceci peut s'expliquer par le changement microstructural du silicium durant le cyclage, car les particules de silicium gonflent jusqu'à éclatement et se décrochent de l'électrode. Le contact n'est pas suffisamment intime entre le carbone et le silicium pour que le carbone compense les changements volumiques du silicium.

Parmi les documents décrivant la préparation de matériaux composites silicium/carbone qui visent à remédier aux inconvénients cités ci-dessus on peut notamment citer les documents de ZHANG et al. [1], de LIU et al. [2], et de CHEN et al. [3].

Le document de ZHANG et al. [1] décrit la préparation de matériaux composites à base de carbone désordonné et de silicium nanométrique par broyage mécanique puis pyrolyse. Plus précisément des quantités précises de poudre de silicium et de poly(chlorure de vinyle) (PVC) ou de poly(paraphénylène) (PPP) sont broyées mécaniquement dans un broyeur à billes pendant 24 heures pour donner des composites Si-polymère dans lesquels les particules de Si sont revêtues par le polymère.

Ces composites Si-polymères sont ensuite chauffés à 650°C, 800°C et 900°C pendant deux heures sous une atmosphère d'argon moyennant quoi le matériau composite final à base de silicium nanométrique et de carbone désordonné est obtenu.

On prépare ensuite des anodes composites pour accumulateurs à ions lithium en appliquant une suspension contenant 80% du matériau composite silicium/carbone, 10% de noir de carbone en tant qu'additif électroniquement conducteur, et 10% de poly(fluorure de vinylidène)( ( en tant que liant PVDF) dans la 1-méthyl-2-pyrrolidone (NMP) des deux cotés d'une toile en cuivre.

Du fait du broyage réalisé pour préparer le matériau composite Si/polymère, il se produit une perte de contact entre le carbone et le silicium.

Le matériau composite Si/C préparé dans ce document [1] présente une morphologie très irrégulière et une granulométrie inégale à cause de ce broyage.

Le document de LIU et al. [2] décrit un procédé de préparation d'un matériau composite silicium/carbone désordonné pour anode d'accumulateur aux ions lithium, dans lequel du PVC et des particules de silicium d'une taille inférieure à 1 micron sont mélangés de manière homogène, puis le mélange est pyrolysé une première fois à 900°C dans une atmosphère d'argon et refroidi. Le produit ainsi obtenu subit ensuite un broyage mécanique à haute énergie (« HEMM »), dans une enceinte fermée, sous argon. Les échantillons ainsi obtenus sont de nouveau mélangés avec du PVC et le mélange est pyrolysé une seconde fois dans les mêmes conditions que lors de la première pyrolyse, et les échantillons ainsi pyrolysés sont broyés et tamisés.

Le matériau ainsi préparé montre une capacité stable à 900 mAh/g après 40 cycles et un rendement faradique au premier cycle de 82%.

Dans ce document [2], un autre composite est préparé en broyant du graphite et du silicium par un procédé de « HEMM » puis en mélangeant le produit obtenu avec du PVC et en réalisant une pyrolyse dans les mêmes conditions que celles déjà décrites ci-dessus.

Du fait du broyage à haute énergie utilisé dans le document [2] pour préparer les composites, il se produit là encore une perte de contact entre le carbone et le silicium, et les matériaux préparés dans le document [2] présentent de nouveau une morphologie très irrégulière et une granulométrie inégale à cause de ce broyage.

Afin de surmonter certains des inconvénients des procédés décrits plus haut, notamment dans les documents [1] et [2], le document de CHEN et al. [3] se propose de préparer des composites Si/C sphériques nanostructurés de granulométrie fine en mettant en oeuvre une technique de séchage-pulvérisation (« Spray drying » en Anglais) suivie par un traitement thermique, moyennant quoi on obtient des composites dans lesquels des particules de silicium nanométriques et de fines particules de graphite sont emprisonnées de manière homogène dans une matrice de carbone produite par la pyrolyse d'une résine phénol-formaldéhyde (« PF »).

Plus précisément, on dissout tout d'abord la résine dans de l'éthanol, puis on ajoute de la poudre de silicium nanométrique et de la poudre fine de graphite à la solution de résine PF pour obtenir ainsi une suspension contenant des particules de graphite et de silicium. Cette suspension est ensuite soumise à une opération de séchage-pulvérisation à l'issue de laquelle des particules sphériques ou sphéroïdes de Si/précurseur PF sont obtenues qui sont chauffées à 1000°C pendant 2 heures, moyennant quoi on obtient un composite Si/C. Ce composite Si/C peut ensuite être dispersé dans une solution de PF puis subir de nouveau les mêmes étapes de séchage-pulvérisation et de pyrolyse moyennant quoi on obtient un composite Si/C revêtu de carbone.

La capacité des composites de ce document [3] augmente lors des premiers cycles jusqu'à 635 mAh/g pour atteindre 500 mAh/g au bout de 40 cycles.

Compte tenu du matériau employé, la capacité théorique des composites du document [3] devrait être de 1363 mAh/g, or on a vu que la capacité pratique est de 635 mAh/g, soit seulement 50% de la capacité théorique.

Les performances électrochimiques du matériau composite préparé dans le document [3] sont donc médiocre et encore insuffisantes notamment en termes de capacité et de rendement.

Le document de SEE HOW NG et ai. : « Amorphous carbon-coated silicon nanocomposites : a low temperature synthesis via spray pyrolysis and their application as high-capacity anodes for lithium-ion batteries", Journal of Physical Chemistry C American Chemical Society USA, vol. 111, no. 29, 26 Juillet 2007, pages 11131-11138, décrit des nanocomposites de silicium revêtus de carbone dans lequel des particules de silicium nanométriques sont mélangées dans une solution d'acide citrique et d'éthanol. Le mélange est ensuite pyrolysé par pulvérisation dans l'air à faible température (300°C à 500°C) pour donner un revêtement uniforme de carbone sur la surface des nanoparticles sphéroïdales de silicium. Dans ce document, la dispersion de particules de silicium est préparée à partir d'une solution d'acide citrique qui n'est pas un polymère et qui de plus contient de l'oxygène.

Le document de LIU Y et al. : « Electrochemical behaviors of Si/C composite synthesized from F-containing precursors », Journal of Power Sources 20090401 Elsevier NL, vol. 189, no. 1, 19 Aout 2008, décrit un procédé de préparation de composites Si/C à partir de poudre de silice et de précurseurs organiques.

Une poudre micrométrique de silicium est mélangée de manière homogène à l'aide d'un broyeur à billes avec une quantité donnée de précurseur (PVdF, saccharose, PVC, PE, PEO, CPE). Puis on pyrolyse le mélange à 900°C dans une atmosphère Argon/hydrogène pendant 1 heure. On refroidit et on broie encore les échantillons.

Ou bien, on ajoute de la silice nanométrique (60 nm) dans une solution de précurseur organique, par exemple une solution de PVDF dans le THF, et on mélange de manière homogène sous l'action d'ultrasons. On évapore le solvant sous agitation pour donner un mélange solide dont on réalise la pyrolyse à 900°C dans une atmosphère Argon/hydrogène pendant 1 heure. On refroidit et on broie encore les échantillons.

Il existe donc au vu de ce qui précède un besoin pour un procédé de préparation d'un matériau composite Silicium Carbone Si/C, qui lorsqu'il est utilisé en tant que matière active d'électrode, notamment d'électrode négative, par exemple d'électrode pour un accumulateur aux ions lithium et notamment d'électrode négative pour un accumulateur aux ions lithium, présente une excellente tenue mécanique lors des cyclages ainsi que d'excellentes performances électrochimiques en termes de capacité, de stabilité de la capacité, et de rendement.

Il existe encore un besoin pour un tel procédé qui soit simple, fiable, et d'un coût modéré.

Le but de la présente invention est de fournir un procédé de préparation d'un matériau composite-silicium carbone qui réponde entre autres aux besoins mentionnés plus haut.

Le but de la présente invention est encore de fournir un procédé de préparation d'un matériau composite silicium/carbone qui ne présente pas les inconvénients, défauts, limitations et désavantages des procédés de l'art antérieur, et qui résolve les problèmes des procédés de l'art antérieur.

### EXPOSÉ DE L'INVENTION

Ce but, et d'autres encore sont atteints, conformément à l'invention par un procédé de préparation d'un matériau composite silicium/carbone constitué par des particules de silicium enrobées par du carbone, dans lequel on réalise les étapes successives suivantes :
a) on mélange des particules de silicium avec une solution d'un polymère sans oxygène dans un solvant, moyennant quoi on obtient une dispersion de particules de silicium dans la solution du polymère ;
b) on soumet la dispersion obtenue dans l'étape a) à une opération d'atomisation-séchage, moyennant quoi on obtient un matériau composite silicium/polymère constitué par des particules de silicium enrobées par le polymère ;
c) on pyrolyse le matériau obtenu dans l'étape b) moyennant quoi on obtient le matériau composite silicium/carbone constitué par des particules de silicium enrobées par du carbone.

Le procédé selon l'invention comprend une suite spécifique d'étapes spécifiques qui n'a jamais été décrite dans l'art antérieur.

En particulier le procédé selon l'invention se distingue fondamentalement des procédés de l'art antérieur, et notamment des procédés de l'art antérieur mettant en oeuvre une technique d'atomisation-séchage en ce que le polymère utilisé est un polymère sans atome d'oxygène, exempt d'oxygène, ne contenant pas d'oxygène.

De manière étonnante, en utilisant un polymère sans atome d'oxygène dans un procédé mettant en jeu une atomisation-séchage et une pyrolyse pour préparer un matériau composite Si/C, les performances d'un accumulateur au lithium comprenant ce matériau en tant que matière électrochimiquement active d'électrode, et notamment d'électrode négative, sont améliorées par rapport à un accumulateur comprenant en tant que matière active d'électrode un composite Si/C préparé par atomisation-séchage et pyrolyse mais à partir d'un polymère ou d'une résine comprenant de l'oxygène.

Bien évidemment, les performances d'un accumulateur aux ions lithium comprenant en tant que matière active d'électrode, et notamment d'électrode négative, le matériau composite préparé par le procédé selon l'invention sont également grandement améliorées par rapport à un accumulateur dont la matière active d'électrode, et notamment d'électrode négative, est constituée par un matériau composite Si/C préparé par un procédé n'impliquant pas une atomisation-séchage tel que le broyage ou le dépôt chimique en phase vapeur (CVD).

En d'autres termes, le procédé selon l'invention présente d'une part tous les avantages inhérents au procédé d'atomisation-séchage en ce qu'il permet de contrôler la granulométrie et la morphologie du composite polymère/Si avant la pyrolyse ce qui assure ensuite un contact fort à l'interface entre le silicium et le carbone après pyrolyse, mais il ne présente pas, d'autre part, les inconvénients liés à l'utilisation d'un polymère comprenant de l'oxygène.

Le procédé selon l'invention ne présente pas les inconvénients des procédés de l'art antérieur et apporte une solution aux procédés de l'art antérieur.

Avantageusement, le polymère peut être choisi parmi le polystyrène (PS), le poly(chlorure de vinyle) (PVC), le polyéthylène, le polyacrylonitrile (PAN), et le polyparaphénylène (PPP).

Avantageusement, le solvant peut être choisi parmi les alcanes halogénés tels que le dichlorométhane ; les cétones telles que l'acétone et la 2-butanone ; le tétrahydrofuranne (THF) ; la N-méthylpyrrolidone (NMP) ; l'acétonitrile ; le diméthylformamide (DMF) ; le diméthylsulfoxyde (DMSO) ; et leurs mélanges.

De préférence le polymère peut être le polystyrène, et le solvant peut être la 2-butanone.

Avantageusement, la concentration du polymère dans la solution peut être de 10 g/litre de solvant à 200 g/litre de solvant.

Les particules de silicium peuvent être des particules micrométriques, c'est-à-dire des particules dont la taille définie par leur plus grande dimension (à savoir par exemple le diamètre dans le cas de particules sphériques) est de 1 à 200 micromètres, de préférence de 1 à 45 micromètres.

Ou bien, les particules de silicium peuvent être des particules nanométriques, c'est-à-dire des particules dont la taille définie par leur plus grande dimension (c'est-à-dire par exemple le diamètre dans le cas de particules sphériques) est de 5 à 1000 nanomètres, de préférence de 5 à 100 nanomètres.

Les particules de silicium nanométriques peuvent être notamment des particules de silicium synthétisées par réduction de SiCl₄ sous une atmosphère contrôlée, c'est-à-dire de préférence sous argon.

Avantageusement, et notamment dans le cas où les particules de silicium nanométriques sont des particules de silicium synthétisées par réduction de SiCl₄ sous atmosphère contrôlée, l'étape a) est alors réalisée sous une atmosphère contrôlée, de préférence sous argon.

Avantageusement, la concentration des particules de silicium dans la dispersion peut être de 0,1 à 50 g/L.

Généralement, les particules de silicium enrobées par le polymère sont de nature sphériques avec un diamètre par exemple de 1 micromètre à 20 micromètres.

De façon plus générale, on a globalement à faire à un matériau composite sphérique ou sphéroïde contenant des particules de silicium piégées dans une matrice de polymère.

Avantageusement, on peut ajouter en outre un dispersant lors de l'étape a).

Généralement, lors de l'étape b) la dispersion est pulvérisée en gouttelettes par une buse portée à une température de 20°C à 220°C, de préférence de 60°C à 110°C.

Avantageusement, l'étape c) est réalisée à une température de 600°C à 1100°C, de préférence de 800°C à 900°C.

Avantageusement, l'étape c) peut être réalisée sous une atmosphère contrôlée telle qu'une atmosphère d'argon, ou d'argon et d'hydrogène.

Généralement les particules de silicium enrobées par du carbone forment des amas et ont une dimension nanométrique.

Le matériau composite obtenu par le procédé selon l'invention trouve notamment son application en tant que matière électrochimiquement active d'électrode dans tout système électrochimique. De préférence, cette électrode est une électrode négative.

Le système électrochimique peut être un accumulateur électrochimique rechargeable, à électrolyte non aqueux qui comprend donc le matériau composite silicium/carbone préparé par le procédé selon l'invention en tant que matière électrochimiquement active d'électrode, de préférence d'électrode négative.

Généralement une telle électrode, de préférence une électrode négative comprend en outre un liant, éventuellement un ou des additifs conducteurs électroniques, et un collecteur de courant.

L'invention va maintenant être décrite de manière plus précise dans la description qui suit, donnée à titre illustratif et non limitatif, en référence aux dessins joints dans lesquels :

### BRÈVE DESCRIPTION DES DESSINS

- La figure 1 est une photographie qui montre un appareil d'atomisation-séchage pour la mise en oeuvre du procédé selon l'invention ;
- La figure 2 est une photographie qui montre la buse d'atomisation qui équipe l'appareil représenté sur la figure 1 ainsi que le brouillard de la dispersion de particules de silicium dans une solution de polymère émis par cette buse ;
- La figure 3 est une vue schématique en coupe verticale d'un accumulateur sous forme de pile bouton comprenant par exemple une électrode positive ou une électrode négative à tester comprenant un matériau composite obtenu par le procédé selon l'invention (exemples 2 à 4) ;
- La figure 4 est une image prise au microscope électronique à balayage (« MEB ») du matériau composite Si/polystyrène obtenu dans l'exemple 1 à l'issue de l'opération d'atomisation-séchage. L'échelle indiquée sur la figure représente 10 µm ;
- La figure 5 est une image prise au microscope électronique à balayage (« MEB ») du matériau composite Si/C obtenu dans l'exemple 1 à l'issue de l'opération de pyrolyse à 900°C. L'échelle indiquée sur la figure représente 5 µm ;
- La figure 6 est un graphique qui donne la capacité (en mAh/g) en charge (courbe en trait plein) et en décharge (courbe en traits pointillés) en fonction du nombre de cycles lors du test selon un premier protocole de cyclage (Exemple 2) d'une pile bouton dont l'électrode positive comprend en tant que matériau actif d'électrode un matériau composite préparé dans l'exemple 1 par le procédé selon l'invention ;
- La figure 7 est un graphique qui donne la capacité en décharge (en mAh/g) en fonction du nombre de cycles lors du test selon un second protocole de cyclage (Exemple 3) d'une pile bouton dont l'électrode positive comprend en tant que matériau actif d'électrode un matériau composite préparé dans l'exemple 1 par le procédé selon l'invention;
- La figure 8 est un graphique qui donne la capacité en décharge (en mAh/g) en fonction du nombre de cycles lors du test selon le premier protocole de cyclage (Exemple 4) d'une pile bouton dont l'électrode positive comprend en tant que matériau actif d'électrode un matériau composite préparé dans l'exemple 1 par le procédé selon l'invention, la pyrolyse étant effectuée à 800°C (courbe en trait plein) ou à 900°C (courbe en traits pointillés).

### EXPOSÉ DÉTAILLÉ DE MODES DE RÉALISATION PARTICULIERS

Cette description se réfère généralement plus particulièrement à un mode de réalisation dans lequel le matériau composite préparé par le procédé selon l'invention est le matériau actif d'électrode positive ou négative d'un accumulateur rechargeable aux ions lithium, mais il est bien évident que la description qui suit pourra être facilement étendue et adaptée le cas échéant, à toute application et mode de mise en oeuvre du matériau composite préparé par le procédé selon l'invention.

Dans la première étape du procédé selon l'invention, on mélange des particules de silicium avec une solution dans un solvant d'un polymère exempt d'atome d'oxygène, moyennant quoi on obtient une dispersion de particules de silicium dans la solution du polymère.

Selon l'invention le polymère est un polymère sans atome d'oxygène, ne contenant pas d'oxygène, exempt d'atomes d'oxygène.

Ce polymère peut être choisi notamment parmi le polystyrène (PS), le poly (chlorure de vinyle) (PVC), le polyéthylène, le polyacrylonitrile (PAN), et le polyparaphénylène (PPP).

Parmi ces polymères, le polymère préféré est le polystyrène (PS) du fait de son absence de toxicité, du fait qu'il est peu onéreux, et du fait qu'il ne dégage pas de chlore.

Le solvant de la solution de polymère peut être choisi parmi une grande variété de solvants. Ainsi ce solvant peut-il être choisi parmi les alcanes halogénés tels que le dichlorométhane ; les cétones telles que l'acétone et la 2-butanone ; le tétrahydrofuranne (THF) ; la N-méthylpyrrolidone (NMP) ; l'acétonitrile ; le diméthylformamide (DMF) ; le diméthylsulfoxyde (DMSO) ; et leurs mélanges.

Pour chaque polymère l'homme du métier pourra facilement déterminer le solvant à choisir pour obtenir une dissolution totale du polymère.

A titre d'exemple, le tableau 1 suivant indique les solvants dans lesquels le poly (chlorure de vinyle) (PVC), le polyparaphénylène (PPP), le polyacrylonitrile (PAN), et le polystyrène (PS) sont solubles à raison de 1 à 50% massique, et préférentiellement de 1 à 20% massique. La solubilité du polymère dans le solvant est indiquée par une croix (X).

**Tableau 1**

| | PCV | PPP | PAN | PS | Température d'ébullition | Température de buse |
|---|---|---|---|---|---|---|
| dichlorométhane | X | X | | | 40°C | 20-70 |
| THF | X | | | X | 65-67°C | 45-95 |
| 2-butanone | X | | | X | 80°C | 60-110 |
| NMP | X | | X | X | 202°C | 180-220 |
| acétonitrile | | | | | 81-82°C | 60-110 |
| acétone | | | | | 55°C | 35-85 |
| DMF | X | | X | | 153°C | 130-183 |
| DMSO | X | | X | | 189°C | 165-210 |

On note que le PPP est très résistant aux attaques chimiques et que seul le dichlorométhane peut le solubiliser.

De préférence le polymère est le polystyrène, et le solvant est la 2-butanone.

La mise en solution du polymère dans le solvant s'effectue généralement sous agitation par exemple pendant une durée suffisante pour que la dissolution du polymère dans le solvant soit totale.

La concentration du polymère dans la solution peut aller jusqu'à la limite de solubilité du polymère dans le solvant choisi, et elle peut être par exemple de 10 g/litre de solvant à 200 g/litre de solvant.

A la solution du polymère dans le solvant on ajoute des particules de silicium qui se présentent généralement sous la forme d'une poudre.

Les particules de silicium peuvent être des particules micrométriques, c'est-à-dire des particules dont la taille définie par leur plus grande dimension (à savoir par exemple le diamètre dans le cas de particules sphériques) est de 1 à 200 micromètres, de préférence de 1 à 45 micromètres.

Ou bien, les particules de silicium peuvent être des particules nanométriques, c'est-à-dire des particules dont la taille définie par leur plus grande dimension (c'est-à-dire par exemple le diamètre dans le cas de particules sphériques) est de 5 à 1000 nanomètres, de préférence de 5 à 100 nanomètres.

Les particules de silicium micrométriques ou nanométriques peuvent être des particules nanométriques ou micrométriques du commerce.

Mais il est à noter que le silicium a une couche d'oxyde native et que le silicium commercial est donc généralement légèrement oxydé. Or, l'oxyde de silicium SiO₂ ne présente pas de bonnes performances électrochimiques et doit, de préférence, être évité. Pour éviter l'oxyde de silicium il peut donc être envisagé d'utiliser du silicium nanométrique préparé, synthétisé par réduction du SiCl₄ sous atmosphère contrôlée telle qu'une atmosphère d'argon, par exemple en boîte à gants.

On pourra à ce propos se reporter au document de Y. KWON et al. [4].

Notamment lorsque l'on utilise du silicium ainsi synthétisé, il est préférable de réaliser l'étape a) sous une atmosphère contrôlée, telle qu'une atmosphère d'argon, par exemple en mélangeant les particules de silicium dans la solution polymérique en boîte à gants.

Le mélange des particules de silicium avec la solution du polymère sans atome d'oxygène est généralement réalisé sous agitation, par exemple au moyen d'un agitateur magnétique, et le mélange est généralement homogénéisé à l'aide d'ultrasons, moyennant quoi on obtient une dispersion homogène de particules de silicium dans la solution du polymère.

La concentration des particules de silicium dans la dispersion peut être de 0,1 à 50 g/L.

Outre les particules de silicium, on peut ajouter un dispersant dans la solution de polymère lors de l'étape a) afin d'éviter l'agglomération des particules de silicium lors du mélange polymère/silicium avant atomisation.

Ce dispersant peut être par exemple la CarboxyMéthylCellulose (CMC) ou, plus généralement, un surfactant anionique tel que le sodium dodécyl sulfate ; cationique tel que le bromure de cétyl triméthyl ammonium ; ou neutre tel que le polyéthylène glycol octyphényl éther.

Le dispersant intervient généralement à hauteur de 0,1 à 100 mmol/g de matériau à disperser.

Conformément au procédé selon l'invention cette dispersion est soumise à une opération d'atomisation-séchage qui permet d'encapsuler les particules de silicium par le polymère, ce dernier étant ensuite pyrolysé.

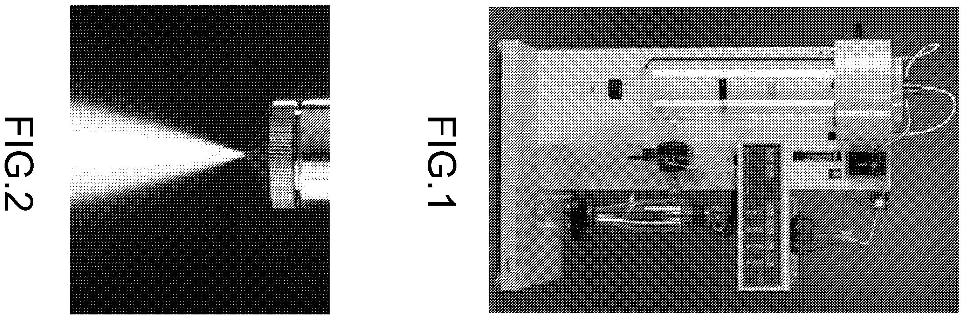

Cette opération d'atomisation-séchage peut être réalisée dans un appareil classique, courant d'atomisation séchage qui est couramment utilisé dans les domaines pharmaceutiques et agroalimentaires tel que celui illustré sur la figure 1.

La dispersion est introduite au sommet d'un atomiseur, tour d'atomisation, en passant au travers d'une buse (voir figure 2) qui atomise, pulvérise la dispersion en gouttelettes.

La température de la buse est généralement réglée en fonction de la température d'ébullition (Tb) du solvant de la dispersion. La température maximale de la buse ou Tbusemax est de préférence égale à environ Tb +30°C tandis que la température minimale de la buse ou Tbusemin est de préférence égale à environ Tb -20°C.

Dans le Tableau 1, ci-dessus sont données les plages de température de buse pour différents solvants de la dispersion avec la température d'ébullition de ceux-ci.

La buse pourra ainsi être généralement portée à une température de 220°C, de préférence de 60°C à 110°C.

Si le système est mis sous pression, on peut alors abaisser la température de la buse.

Les gouttelettes ainsi formées sont alors séchées par un courant de gaz chaud, par exemple d'air chaud, qui fait s'évaporer le solvant, avant de tomber sur les parois intérieures de l'appareil.

Le matériau composite silicium/polymère, généralement sous la forme d'une poudre, est recueilli généralement à l'aide d'un cyclone.

Le gaz, tel que l'air, chargé en solvant est généralement refroidi dans un échangeur de chaleur puis condensé dans une unité de réfrigération, et enfin récupéré dans un bac prévu à cet effet. Le gaz tel que de l'air est, quant à lui, généralement réinjecté dans l'atomiseur.

L'atomisation-séchage permet d'obtenir un composite polymère/silicium de morphologie généralement sphérique ou sphéroïde et de granulométrie contrôlée.

Généralement, le matériau composite silicium/polymère contient des particules de silicium piégées dans une matrice de polymère et il se présente généralement sous la forme de particules.

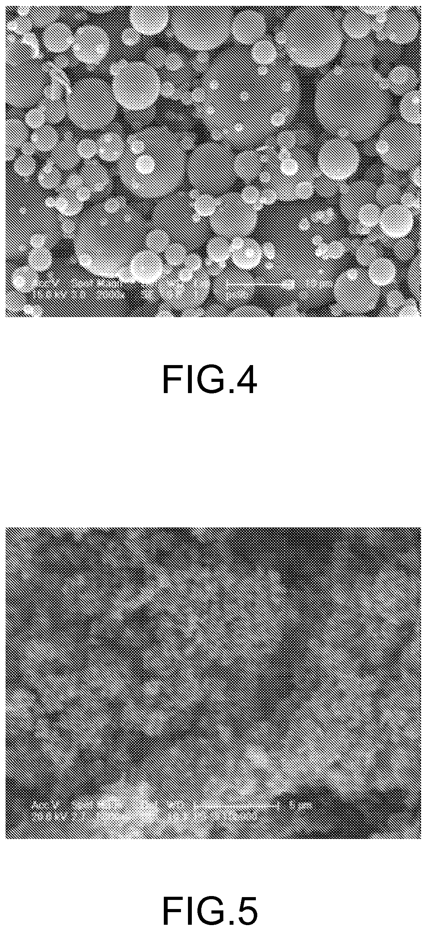

Généralement, les particules de silicium enrobées par le polymère obtenues à l'issue de l'opération d'atomisation-séchage sont sphériques ou sphéroïdes et ont généralement un diamètre de 1 micromètre à 20 micromètres dans le cas de particules de silice nanométriques, comme cela est montré sur la figure 5.

Les particules forment généralement une poudre.

Les morphologie et granulométrie contrôlée mentionnées ci-dessus assurent qu'à l'issue de la pyrolyse une interface forte entre le silicium et le carbone soit conservée.

Le matériau composite silicium/polymère généralement constitué par une poudre formée par des particules de silicium enrobées par le polymère est ensuite, conformément au procédé selon l'invention, soumis à un traitement thermique de pyrolyse à une température généralement de 600°C à 1100°C.

Ce traitement est généralement réalisé sous une atmosphère contrôlée, à savoir une atmosphère non oxydante telle qu'une atmosphère d'argon, ou une atmosphère d'argon et d'hydrogène pour minimiser l'oxydation.

En fait, pour éviter ou minimiser les contacts possibles entre le silicium et une source d'oxygène il serait préférable de réaliser l'ensemble du procédé sous une atmosphère contrôlée, non oxydante, exempte d'oxygène, telle qu'une atmosphère d'argon.

La pyrolyse peut être réalisée dans un appareil tel qu'un four tubulaire sous flux d'argon.

Le matériau composite Si/C final obtenu par le procédé selon l'invention se présente par exemple (voir figure 5) sous la forme de particules de silicium enrobées par du carbone, plus exactement par une matrice de carbone. Ces particules forment généralement des amas ou agrégats de Si et de C et ont généralement une dimension nanométrique.

Le matériau composite Si/C peut se présenter par exemple sous la forme de particules formant généralement une poudre.

Le matériau composite ainsi préparé par le procédé selon l'invention peut être utilisé en tant que matière électrochimiquement active dans tout système électrochimique.

Plus précisément le matériau composite préparé par le procédé selon l'invention peut notamment être utilisé en tant que matière électrochimiquement active d'électrode positive ou négative dans tout système électrochimique à électrolyte non aqueux.

Cette électrode positive ou négative comprend, outre la matière électrochimiquement active d'électrode positive ou négative telle que définie plus haut, un liant qui est généralement un polymère organique, éventuellement un ou des additif(s) conducteur(s) électronique(s), et un collecteur de courant.

Le polymère organique peut être choisi parmi le polytrétrafluoroéthylène (PTFE), le poly(fluorure de vinylidène) (PVDF), le copolymère PVDF-HFP (hexafluorure de propylène) ; et les élastomères tels que le CMC-SBR (carboxyméthylcellulose-caoutchouc styrène butadiène).

L'additif conducteur électronique éventuel peut être choisi parmi les particules métalliques telles que les particules d'Ag, le graphite, le noir de carbone, les fibres de carbone, les nanofils de carbone, les nanotubes de carbone et les polymères conducteurs électroniques, et leurs mélanges.

Le collecteur de courant se présente généralement sous la forme d'une feuille de cuivre, nickel ou aluminium.

L'électrode comprend généralement de 70 à 94% en masse de matière électrochimiquement active, de 1 à 20% en masse, de préférence de 1 à 10% en masse du liant, et éventuellement de 1 à 15% en masse du ou des additif(s) conducteur(s) électronique(s).

Une telle électrode peut être préparée de manière classique en formant une suspension, pâte ou encre avec la matière électrochimiquement active, le liant, éventuellement le ou les additifs conducteurs et un solvant, en déposant, enduisant ou imprimant cette suspension, pâte ou encre sur un collecteur de courant, en séchant l'encre, pâte ou suspension déposée, et en calandrant, pressant l'encre ou pâte déposée, séchée et le collecteur de courant.

Il est à noter que selon un avantage supplémentaire du matériau composite Si/C préparé par le procédé selon l'invention sa mise en oeuvre en électrode ne demande pas de broyage mécanique important puisqu'un simple broyage au mortier qui n'affecte en aucune manière les propriétés du composite suffit pour casser les agglomérats qui pourraient être présents.

L'encre, pâte ou suspension peut être appliquée par tout procédé adéquat tel que l'enduction, le couchage, l'héliogravure, la flexographie, l'offset.

Le système électrochimique peut être notamment un accumulateur électrochimique rechargeable à électrolyte non aqueux tel qu'un accumulateur ou une batterie au lithium, et plus particulièrement un accumulateur à ions lithium, qui outre l'électrode positive ou négative telle que définie plus haut, comprenant en tant que matière électrochimiquement active le matériau composite préparé par le procédé selon l'invention, comprend une électrode négative ou positive qui ne comprend pas le matériau composite obtenu par le procédé selon l'invention, et un électrolyte non aqueux.

L'électrode négative ou positive, qui ne comprend pas en tant que matière électrochimiquement active le matériau composite obtenu par le procédé selon l'invention, comprend une matière électrochimiquement active différente du matériau composite obtenu par le procédé selon l'invention, un liant, éventuellement un ou plusieurs additif(s) conducteur(s) électronique(s) et un collecteur de courant.

Le liant et le ou les additif(s) électronique(s) éventuel(s) ont déjà été décrits plus haut.

La matière électrochimiquement active de l'électrode négative ou positive qui ne comprend pas le matériau composite obtenu par le procédé selon l'invention en tant que matière électrochimiquement active peut être choisie parmi tous les matériaux connus de l'homme du métier.

Ainsi lorsque le matériau composite obtenu par le procédé selon l'invention est la matière électrochimiquement active de l'électrode positive, alors la matière électrochimiquement active de l'électrode négative peut être choisie parmi le lithium et tout matériau connu de l'homme du métier dans ce domaine de la technique.

Lorsque la matière électrochimiquement active de l'électrode négative est formée par le matériau obtenu par le procédé selon l'invention, la matière électrochimiquement active de l'électrode positive peut être faite de tout matériau connu et adaptable par l'homme du métier.

L'électrolyte peut être solide ou liquide.

Lorsque l'électrolyte est liquide, il est constitué par exemple par une solution d'au moins un sel conducteur tel qu'un sel de lithium dans un solvant organique et/ou un liquide ionique.

Lorsque l'électrolyte est solide, il comprend une matière polymère et un sel de lithium.

Le sel de lithium peut être choisi par exemple parmi LiAsF₆, LiClO₄, LiBF₄, LiPF₆, LiBOB, LiODBF, LiB(C₆H₅), LiCF₃SO₃, LiN(CF₃SO₂)₂ (LiTFSI), LiC(CF₃SO₂)₃ (LiTFSM).

Le solvant organique est préférentiellement un solvant compatible avec les constituants des électrodes, relativement peu volatile, aprotique et relativement polaire. On peut citer par exemple les éthers, les esters et leurs mélanges.

Les éthers sont notamment choisis parmi les carbonates linéaires comme le carbonate de diméthyle(DMC), le carbonate de diéthyle (DEC), le carbonate de méthyléthyle (EMC), le carbonate de dipropyle (DPC), les carbonates cycliques comme le carbonate de propylène (PC), le carbonate d'éthylène (EC), et le carbonate de butylène ; les esters d'alkyle comme les formiates, les acétates, les propionates et les butyrates ; le gamma butyrolactone, le triglyme, le tétraglyme, le lactone, le diméthylsulfoxyde, le dioxolane, le sulfolane et leurs mélanges. Les solvants sont préférentiellement des mélanges incluant EC/DMC, EC/DEC, EC/DPC et EC/DMC.

L'accumulateur peut avoir notamment la forme d'une pile bouton.

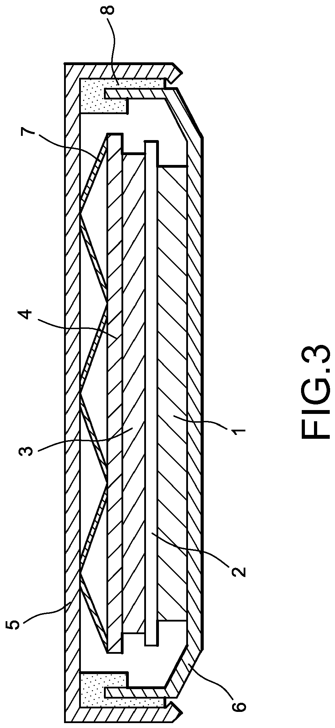

Les différents éléments d'une pile bouton, en acier inoxydable 316L, sont décrits sur la figure 3.

Ces éléments sont les suivants :
- les parties supérieure (5) et inférieure (6) du boîtier en inox,
- le joint en polypropylène (8),
- les cales en inox (4), qui servent à la fois par exemple à la découpe du lithium métal puis, plus tard, à assurer le bon contact des collecteurs de courant avec les parties externes de la pile,
- un ressort (7), qui assure le contact entre tous les éléments,
- un séparateur microporeux (2) imbibé d'électrolyte,
- des électrodes (1) (3).

L'invention va maintenant être décrite en référence aux exemples suivants donnés à titre illustratif et non limitatif.

### Exemple 1 :

Dans cet exemple on prépare un matériau composite silicium/carbone par le procédé selon l'invention.

On met en solution sous agitation du polystyrène (PS) dans la 2-butanone, à des concentrations allant de 200 g/litre de solvant à 10 g/litre de solvant. La solution préférée est à 60 g/litre.

On attend chaque fois la dissolution totale du polystyrène dans le solvant et on obtient ainsi une solution de polystyrène dans la 2-butanone.

Dans chacune des solutions de polystyrène on ajoute du silicium sous la forme d'une poudre de taille de nanoparticules inférieure à 100nm de chez Aldrich^{®}, et on homogénéise par les ultrasons et sous agitation magnétique. On obtient ainsi des dispersions de particules de silicium dans les solutions de polystyrène, par exemple une dispersion à 60 g de PS par litre de solvant et 3 g de Si par litre de solvant.

Chacune de ces dispersions est ensuite introduite dans un dispositif d'atomisation-séchage à savoir un appareil « mini spray dryer B290 » de la société Büchi^{®}. Chacune des dispersions passe dans la buse du dispositif d'atomisation-séchage avec une température de buse comprise entre 60°C (Tbusemin) et 110°C (Tbusemax). Ainsi le solvant s'évapore et une poudre constituée de particules de silicium enrobées par du polystyrène ou plutôt d'une matrice polymère avec des inclusions de Si, est récupérée dans le bac de l'appareil d'atomisation.

Comme on peut le constater sur l'image MEB de la Figure 4, les particules de matériau composite Si/PS obtenues après l'atomisation-séchage d'une dispersion comprenant 3 g de Si par litre de solvant et 60g de PS par litre de solvant, sont sphériques avec un diamètre compris entre 1 micromètre et 20 micromètres pour un diamètre de poudre de Si initiale de 5 à 100 nm.

Plus la concentration en PS de la dispersion augmente, plus la taille des particules de matériau composite augmente.

Cette poudre de particules de silicium enrobées par du polystyrène (composite Si/PS) est ensuite pyrolysée dans un four tubulaire à différentes températures constantes entre 600°C et 1100°C, par exemple à 800°C et 900°C sous une atmosphère contrôlée d'argon et d'hydrogène pour minimiser son oxydation.

Comme on peut le constater sur l'image MEB de la figure 5, la poudre de composite Si/C obtenue après pyrolyse à 900°C de la poudre de la figure 4 a une structure nanométrique.

Le polystyrène après pyrolyse à 900°C, perd environ 95% de sa masse.

Les particules de cette poudre sont des particules de silice enrobées dans une matrice de carbone.

Les matériaux composites Si/C préparés dans l'exemple 1 ont ensuite été testés en tant que matériau actif d'électrode positive dans des batteries lithium métal (*test en demi-pile*) de type « pile-bouton ». Ces tests font l'objet des exemples 2 à 4.

Chaque pile bouton est montée en respectant scrupuleusement le même protocole. Sont ainsi empilés à partir du fond du boitier de la pile, come cela est montré sur la figure 3 :
- une électrode négative de lithium (16 mm de diamètre, 130 micromètre d'épaisseur) (1) déposée sur un disque de nickel servant de collecteur de courant, mais on pourrait utiliser toute autre matière active d'électrode négative, choisie notamment parmi les matières actives classiques utilisées dans la technique pour une électrode négative en milieu non aqueux ;
- 200 µL d'électrolyte liquide à base de sel LPF₆ à raison de 1 mol/L. en solution dans un mélange de carbonate d'éthylène et de carbonate de diméthyle, mais on pourrait utiliser tout autre électrolyte liquide non aqueux connu dans la technique ;
- l'électrolyte imbibe un séparateur qui est une membrane microporeuse en polyoléfine, plus précisément une membrane microporeuse en polypropylène Celgard^{®} (2) Ø 16,5 mm ;
- une électrode positive (3) constituée d'un disque de 14 mm de diamètre prélevée sur un film composite de 25 µm d'épaisseur comprenant le composite Si/C décrit ci-dessus préparé dans l'exemple 1 (80 % en masse), du noir de carbone (10 % en masse) en guise de matériau conducteur et de l'hexafluorure de polyvinylidène (10 % en masse) en guise de liant, le tout étant déposé sur un collecteur de courant en cuivre (feuillard de 18 µm d'épaisseur);
- un disque ou cale en inox (4),
- un couvercle en inox (5) et un fond en inox (6),
- un ressort en inox (7) et un joint en polypropylène (8).

Le boîtier en inox est alors fermé à l'aide d'une sertisseuse, le rendant parfaitement étanche à l'air. Pour vérifier si les piles sont opérationnelles, celles-ci sont contrôlées par la mesure de la tension à l'abandon.

Du fait de la forte réactivité du lithium et de ses sels à l'oxygène et à l'eau, la mise en pile bouton se fait en boîte à gants. Celle-ci est maintenue en légère surpression sous atmosphère d'argon anhydre. Des capteurs permettent de surveiller continuellement la concentration en oxygène et en eau. Typiquement, ces concentrations doivent rester inférieures à la ppm.

Les matériaux composites Si/C préparés par le procédé selon l'invention dans l'exemple 1, et montés dans les piles boutons conformément à la procédure décrite ci-dessus subissent des cyclages, c'est-à-dire des charges et des décharges à différents régimes à courant constant, pendant un nombre déterminé de cycles, pour évaluer la capacité pratique de la pile.

Par exemple, une batterie qui charge en régime C/20 est une batterie à laquelle on impose un courant constant pendant 20 heures dans le but de récupérer toute sa capacité C. La valeur du courant est égale à la capacité C divisée par le nombre d'heures de charge à savoir dans ce cas 20 heures.

### Exemple 2 :

Dans cet exemple le matériau actif d'électrode comprend un matériau composite Si/C préparé conformément à l'exemple 1 ci-dessus par pyrolyse d'un composite Si/PS (figure 4) à une température de 900°C.

Un test est réalisé selon un premier protocole de cyclage:
- 20 cycles de charge-décharge C/10 (charge en 10 heures, décharge en 10 heures),
- 10 cycles de charge-décharge à C/5,
- 5 cycles de charge-décharge à C/2,
- 5 cycles à C,
- 5 cycles à 2C,
- 5 cycles de charge-décharge à C/5.

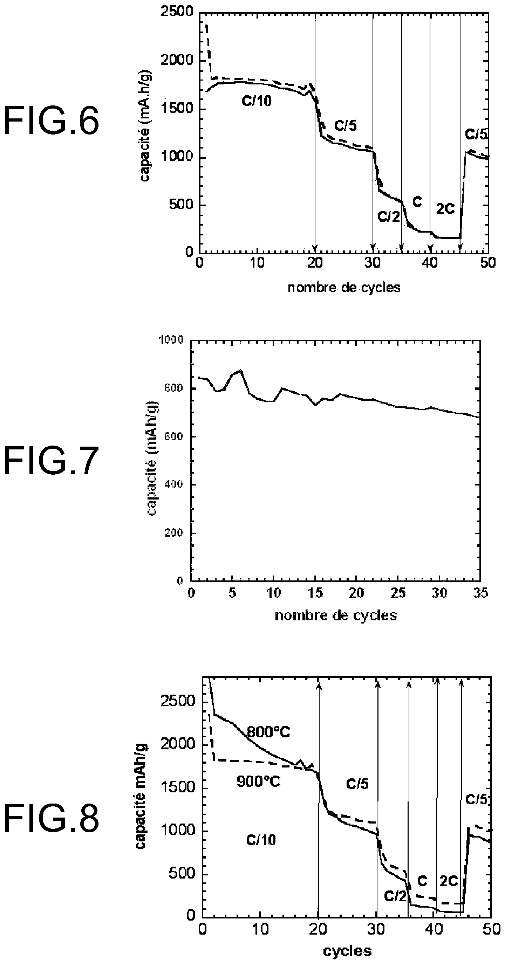

Les résultats de ce test sont illustrés sur la figure 7.

On constate que à 20°C, sous un régime de C/10 (C équivalente à 1300 mAh/g), ce système délivre une capacité stable d'environ 1700 mAh/g (Figure 6).

Après des cyclages successifs à C/5, C/2, C, 2C, le système retrouve une capacité de l'ordre de 1000 mAh/g.

### Exemple 3 :

Dans cet exemple une pile comprenant le même matériau actif d'électrode que celui de l'exemple 2 subit un test selon un second protocole de cyclage comprenant 35 cycles de charge-décharge à C/2,5. On constate que la capacité avoisine 800 mAh/g avec une très faible baisse de capacité comme cela est montré sur la figure 7.

### Exemple 4 :

Dans cet exemple on compare les performances électrochimiques d'un matériau actif d'électrode comprenant un matériau composite Si/C préparé conformément à l'exemple 1 ci-dessus par pyrolyse d'un composite Si/PS (figure 4) à une température de 900°C et celles d'un matériau actif d'électrode comprenant un matériau composite Si/C préparé conformément à l'exemple 1 ci-dessus par pyrolyse d'un composite Si/PS (figure 4) à une température de 800°.

Ces deux matériaux sont testés suivant le même protocole que celui de l'exemple 2.

Les résultats de ces tests sont donnés sur la figure 8.

On constate que le matériau composite préparé par pyrolyse à 900°C donne de meilleures performances électrochimiques. La capacité est stable pour les régimes C/10 et C/5, contrairement à la pile dont le matériau actif d'électrode positive comprend un matériau composite préparé par pyrolyse à 800°C. La capacité est légèrement moins importante pour les bas régimes.

### RÉFÉRENCES

[1] X.W. Zhang, P.K. Patil, C.Wang, A.J. Appleby, F.E Little, D.L Cocke, Journal of Power Sources, 125 (2004),206 - 213.
[2] Y. Liu, K. Hanai, J. Yang, N. Imanishi, A. Hirano, Y. Takeda, Electrochemical and Solid-State Letters, 7(10), A369-A372 (2004).
[3] L. Chen, X. Xie, B. Wang, K. Wang, J.Xie, Materials Science and Engineering, B: Solid-State Materials for Advanced Technology, 131(1-3), 186-190, 2006.
[4] Y.Kwon, G.S. Park, J. Cho, Electrochimica Acta, 52(2007), 4663-4668.

## Revendications

1. Procédé de préparation d'un matériau composite silicium/carbone constitué par des particules de silicium enrobées par du carbone, dans lequel on réalise les étapes successives suivantes :
a) on mélange des particules de silicium avec une solution d'un polymère sans oxygène dans un solvant, moyennant quoi on obtient une dispersion de particules de silicium dans la solution du polymère ;
b) on soumet la dispersion obtenue dans l'étape a) à une opération d'atomisation-séchage, moyennant quoi on obtient un matériau composite silicium/polymère constitué par des particules de silicium enrobées par le polymère ;
c) on pyrolyse le matériau obtenu dans l'étape b) moyennant quoi on obtient le matériau composite silicium/carbone constitué par des particules de silicium enrobées par du carbone.

2. Procédé selon la revendication 1 dans lequel le polymère est choisi parmi le polystyrène (PS), le poly(chlorure de vinyle) (PVC), le polyéthylène, le polyacrylonitrile (PAN), et le polyparaphénylène (PPP).

3. Procédé selon la revendication 1 dans lequel le solvant est choisi parmi les alcanes halogénés tels que le dichloromëthane ; les cétones telles que l'acétone et la 2-butanone ; le tétrahydrofuranne (THF) ; la N-méthylpyrrolidone (NMP) ; l'acétonitrile ; le diméthylformamide (DMF) ; le diméthylsulfoxyde (DMSO) ; et leurs mélanges.

4. Procédé selon la revendication 1 dans lequel le polymère est le polystyrène, et le solvant est la 2-butanone.

5. Procédé selon l'une quelconque des revendications précédentes dans lequel la concentration du polymère dans la solution est de 10 g/litre de solvant à 200 g/litre de solvant.

6. Procédé selon l'une quelconque des revendications précédentes dans lequel les particules de silicium sont des particules micrométriques.

7. Procédé selon l'une quelconque des revendications 1 à 5 dans lequel les particules de silicium sont des particules nanométriques.

8. Procédé selon la revendication 7 dans lequel les particules de silicium sont des particules de silicium synthétisées par réduction de SiCl₄ sous une atmosphère contrôlée, de préférence sous argon.

9. Procédé selon la revendication 8 dans lequel l'étape a) est réalisée sous une atmosphère contrôlée, de préférence sous argon.

10. Procédé selon l'une quelconque des revendications précédentes dans lequel la concentration des particules de silicium dans la dispersion est de 0,1 à 50 g/L.

11. Procédé selon l'une quelconque des revendications précédentes dans lequel les particules de silicium enrobées par le polymère, sont sphériques, et ont par exemple un diamètre de 1 micromètre à 20 micromètres.

12. Procédé selon l'une quelconque des revendications précédentes dans lequel on ajoute en outre un dispersant lors de l'étape a).

13. Procédé selon l'une quelconque des revendications précédentes dans lequel lors de l'étape b) la dispersion est pulvérisée en gouttelettes par une buse portée à une température de 20°C à 220°C, de préférence de 60°C à 110°C.

14. Procédé selon l'une quelconque des revendications précédentes, dans lequel l'étape c) est réalisée à une température de 600°C à 1100°C, de préférence de 800°C à 900°C.

15. Procédé selon l'une quelconque des revendications précédentes dans lequel l'étape c) est réalisée sous une atmosphère contrôlée telle qu'une atmosphère d'argon ou d'argon et d'hydrogène.

## Patentansprüche

1. Verfahren zur Herstellung eines Silicium/Kohlenstoff-Kompositmaterials, gebildet durch mit Kohlenstoff umhüllte Siliciumpartikel, bei dem man die folgenden sukzessiven Schritte ausführt:
a) man mischt die Siliciumpartikel mit einer Lösung aus einem Polymer ohne Sauerstoff in einem Lösungsmittel, wodurch man eine Dispersion von Siliciumpartikeln in der Lösung des Polymers erhält;
b) man unterzieht die in dem Schritt a) erhaltene Dispersion einer Atomisierungs-Trocknungs-Operation, wodurch man ein Silicium/Polymer-Verbundmaterial erhält, gebildet durch von dem Polymer umhüllte Siliziumpartikel ;
c) man pyrolisiert das in dem Schritt b) erhaltene Material, wodurch man das Silicium/Kohlenstoff-Verbundmaterial erhält, gebildet durch von Kohlenstoff umhüllte Siliciumpartikel.

2. Verfahren nach Anspruch 1, bei dem das Polymer ausgewählt wird unter dem Polystyrol (PS), dem Polyvinylchlorid (PVC), dem Polyethylen, dem Polyacrylnitril (PAN) und dem Polyparaphenylen (PPP).

3. Verfahren nach Anspruch 1, bei dem das Lösungsmittel ausgewählt wird unter halogenisierten Alkanen wie zum Beispiel dem Dichlormethan ; den Ketonen wie zum Beispiel dem Aceton und dem 2-Butanon ; dem Tetrahydrofuran (THF) ; dem N-Methylpyrrolidon (NMP) ; dem Acetonitril ; dem Dimethylformamid (DMF) ; dem Dimethylsulfoxid (DMSO) ; und ihren Mischungen.

4. Verfahren nach Anspruch 1, bei dem das Polymer das Polystyrol ist, und das Lösungsmittel das 2-Butanon ist.

5. Verfahren nach einem der vorhergehenden Ansprüche, bei dem die Konzentration des Polymers in der Lösung von 10 g/Liter des Lösungsmittels bis 200 g/Liter des Lösungsmittels beträgt.

6. Verfahren nach einem der vorhergehenden Ansprüche, bei dem die Siliciumpartikel mikrometrische Partikel sind.

7. Verfahren nach einem der Ansprüche 1 bis 5, bei dem die Siliciumpartikel nanometrische Partikel sind.

8. Verfahren nach Anspruch 7, bei dem die Siliciumpartikel durch Reduktion von SiCl₄ synthetisierten Silicium Partikeln, unter einer kontrollierten Atmosphäre, vorzugsweise unter Argon, sind.

9. Verfahren nach Anspruch 8, bei dem der Schritt a) realisiert wird unter einer kontrollierten Atmosphäre, vorzugsweise unter Argon.

10. Verfahren nach einem der vorhergehenden Ansprüche, bei dem die Konzentration der Siliciumpartikel in der Dispersion 0,1 bis 50 g/l beträgt.

11. Verfahren nach einem der vorhergehenden Ansprüche, bei dem die von Polymer umhüllten Siliciumpartikel sphärisch sind und zum Beispiel einen Durchmesser von 1 Mikrometer bis 20 Mikrometer haben.

12. Verfahren nach einem der vorhergehenden Ansprüche, bei dem man außerdem in Schritt a) ein Dispersionsmittel beigibt.

13. Verfahren nach einem der vorhergehenden Ansprüche, bei dem die Dispersion in Schritt b) durch eine auf eine Temperatur von 20°C bis 220 °C, vorzugsweise von 60°C bis 110°C gebrachte Düse zerstäubt wird .

14. Verfahren nach einem der vorhergehenden Ansprüche, bei dem der Schritt c) bei einer Temperatur von 600 °C bis 1100 °C, vorzugsweise von 800 °C bis 900 °C ausgeführt wird.

15. Verfahren nach einem der vorhergehenden Ansprüche, bei dem der Schritt c) unter einer kontrollierten Atmosphäre realisiert wird, zum Beispiel einer Argon- oder einer Argonund Wasserstoffatmosphäre.

## Claims

1. Process for preparing a composite silicon/carbon material consisting of carbon-coated silicon particles, wherein the following successive steps are carried out:
a) silicon particles are mixed with a solution of an oxygen-free polymer in a solvent, whereby a dispersion of silicon particles in the polymer solution is obtained;
b) the dispersion obtained in step a) is subjected to a spray-drying operation, whereby a composite silicon/polymer material consisting of silicon particles coated with the polymer is obtained;
c) the material obtained in step b) is pyrolyzed, whereby the composite silicon/carbon material consisting of carbon-coated silicon particles is obtained.

2. The process according to claim 1, wherein the polymer is chosen from among polystyrene (PS), poly(vinyl chloride) (PVC), polyethylene, polyacrylonitrile (PAN), and polyparaphenylene (PPP).

3. The process according to claim 1, wherein the solvent is chosen from among the halogenated alkanes such as dichloromethane; ketones such as acetone and 2-butanone; tetrahydrofuran (THF); N-methylpyrrolidone (NMP); acetonitrile; dimethylformamide (DMF); dimethylsulfoxide (DMSO); and mixtures thereof.

4. The process according to claim 1, wherein the polymer is polystyrene, and the solvent is 2-butanone.

5. The process according to any one of the preceding claims, wherein the concentration of polymer in the solution is 10 g/litre of solvent to 200 g/litre of solvent.

6. The process according to any one of the preceding claims, wherein the silicon particles are micrometric particles.

7. The process according to any one of claims 1 to 5, wherein the silicon particles are nanometric particles.

8. The process according to claim 7, wherein the silicon particles are silicon particles synthesized by reducing SiCl₄ under a controlled atmosphere, preferably under argon.

9. The process according to claim 8, wherein step a) is carried out under a controlled atmosphere, preferably under argon.

10. The process according to any one of the preceding claims, wherein the concentration of the silicon particles in the dispersion ranges from 0.1 to 50 g/L.

11. The process according to any one of the preceding claims, wherein the silicon particles coated with the polymer are spherical and have a diameter of 1 micrometre to 20 micrometres for example.

12. The process according to any one of the preceding claims, wherein a dispersant is further added in step a).

13. The process according to any one of the preceding claims, wherein in step b) the dispersion is sprayed in droplets by a nozzle brought to a temperature of 20°C to 220°C, preferably 60°C to 110°C.

14. The process according to any one of the preceding claims, wherein step c) is carried out at a temperature of 600°C to 1100°C, preferably 800°C to 900°C.

15. The process according to any one of the preceding claims, wherein step c) is carried out under a controlled atmosphere, such as an atmosphere of argon or an atmosphere of argon and hydrogen.
